# EUROPEAN PATENT APPLICATION

(11) **EP 2 228 649 A2**
(43) Date of publication of application: **15.09.2010**
(21) Application number: 10250393.5
(22) Date of filing: 04.03.2010
(51) Int. Cl.: G01N 27/68, G01N 15/06

(54) **Particulate matter detection device**

(30) Priority: 12.03.2009 JP 2009058847
(71) Applicant: NGK Insulators, Ltd., Nagoya-shi, Aichi 467-8530 (JP)
(72) Inventor: Masahiro Tokuda, Aichi-ken, 467-8530 (JP); Takeshi Sakuma, Aichi-ken, 467-8530 (JP); Atsuo Kondo, Nagaya City, Aichi-ken, 467-8530 (JP); Takashi Egami, Aichi-ke, 467-8530 (JP)
(74) Representative: Paget, Hugh Charles Edward

(57) **Abstract**

A particulate matter detection device (100) includes a detection device body (1) that extends in one direction and has at least one through-hole (2) that is formed at one end of the detection device body (1), a pair of electrodes (11, 12) that are buried in the wall of the detection device body (1) that defines the through-hole (2), and are covered with a dielectric, and a heating section (13) that is disposed in the detection device body (1) along the wall surface of the through-hole (2), and adjusts the temperature of the wall that defines the through-hole (2), the heating section (13) being covered with a protective layer (15) that is formed of alumina having a purity of 95% or more, and the particulate matter detection device allowing a particulate matter contained in a fluid that flows into the through-hole (2) to be electrically adsorbed on the wall surface of the through-hole (2), and detecting the mass of the particulate matter adsorbed on the wall surface of the through-hole (2) by measuring a change in electrical properties of the wall that defines the through-hole (2).

## Description

### BACKGROUND OF THE INVENTION

The present invention relates to a particulate matter detection device. More particularly, the present invention relates to a particulate matter detection device that has a reduced size, shows only a small measurement error, and can be produced inexpensively.

A flue exhaust gas or a diesel engine exhaust gas contains a particulate matter (PM) such as soot or the like and has been a cause for air pollution. A filter (diesel particulate filter : DPF) made of a ceramic or the like has been widely used to remove the particulate matter. The ceramic DPF can be used for a long period of time, but may suffer defects such as cracks or erosion due to thermal deterioration or the like, so that a small amount of particulate matter may leak from the DPF. It is very important to immediately detect such occurrence of the defects and to recognize the abnormality of a device from the viewpoint of preventing air pollution.

Such defects may be detected by providing a particulate matter detection device on the downstream side of the DPF (e.g., JP-A-60-123761).

### SUMMARY OF THE INVENTION

According to JP-A-60-123761, the particulate matter is charged by causing a corona discharge, and an ion current due to the charged particulate matter is measured to determine the amount of the particulate matter. According to this method, since the ion current due to the charged particulate matter is weak, there has been a problem that a large-scale detection circuit is required for detecting such a weak ion current so that cost increases. Moreover, since the particulate matter cannot be effectively charged when the exhaust gas flow rate is large, the amount of particulate matter measured may be smaller than the amount of particulate matter actually contained in the exhaust gas. Therefore, there has also been a problem that a large error occurs.

The present invention was conceived in view of the above problems. An object of the present invention is to provide a particulate matter detection device that has a reduced size, shows only a small measurement error, and can be produced inexpensively.

To achieve the above object, according to the present invention, there is provided a particulate matter detection device as follows.

[1] A particulate matter detection device comprising a detection device body that extends in one direction and has at least one through-hole that is formed at one end of the detection device body, at least one pair of electrodes that are buried in the wall of the detection device body that defines the through-hole, and are covered with a dielectric, and a heating section that is disposed in the detection device body along the wall surface of the through-hole, and adjusts the temperature of the wall that defines the through-hole, the heating section being covered with a protective layer that is formed of alumina having a purity of 95% or more, the particulate matter detection device being configured so that the charged particulate matter contained in a fluid that flows into the through-hole, or the particulate matter that is contained in a fluid that flows into the through-hole and is charged by a discharge that occurs in the through-hole due to application of a voltage between the pair of electrodes, can be electrically adsorbed on the wall surface of the through-hole, and the particulate matter adsorbed on the wall surface of the through-hole can be detected by measuring a change in electrical properties of the wall that defines the through-hole.

[2] The particulate matter detection device according to [1], wherein the dielectric is at least one compound selected from the group consisting of alumina, cordierite, mullite, glass, zirconia, magnesia, and titania.

[3] The particulate matter detection device according to [1], wherein the dielectric is alumina having a purity of 90% or more and less than the purity of alumina that forms the protective layer.

[4] The particulate matter detection device according to any one of [1] to [3], wherein the heating section is formed of at least one metal selected from the group consisting of tungsten, molybdenum, copper, aluminum, silver, gold, iron, and platinum.

[5] The particulate matter detection device according to any one of [1] to [4], wherein a takeout lead terminal of at least one of the pair of electrodes is disposed at the other end of the detection device body.

[6] The particulate matter detection device according to any one of [1] to [5], wherein a takeout lead terminal of the heating section is disposed at the other end of the detection device body.

[7] The particulate matter detection device according to any one of [1] to [6], wherein at least one of a fluid inlet and a fluid outlet of the through-hole is expanded.

[8] The particulate matter detection device according to any one of [1] to [7], wherein the cross-sectional shape of the detection device body in the direction perpendicular to the center axis of the detection device body gradually increases in thickness from one end toward the center, has the maximum thickness at the center, and gradually decreases in thickness toward the other end in an extension direction of the through-hole.

[9] The particulate matter detection device according to any one of [1] to [8], the particulate matter detection device being configured so that the particulate matter adsorbed on the wall surface of the through-hole can be oxidized and removed by causing a discharge to occur in the through-hole by applying a voltage between the pair of electrodes.

[10] The particulate matter detection device according to any one of [1] to [9], wherein the discharge that occurs in the through-hole is selected from the group consisting of a silent discharge, a streamer discharge, and a corona discharge.

The particulate matter detection device according to the present invention is configured so that at least one pair of electrodes is buried in the wall of the detection device body that defines the through-hole, and a particulate matter present in the through-hole can be charged by causing a discharge to occur in the through-hole by applying a voltage between the pair of electrodes, and the charged particulate matter electrically adsorbed on the electrode (i.e., the wall surface of the through-hole). This makes it possible to measure the mass of particulate matter contained in exhaust gas that flows on the downstream side of a DPF and has flowed into the through-hole. Specifically, the particulate matter detection device according to the present invention does not measure the total amount of particulate matter contained in exhaust gas that flows on the downstream side of the DPF, but measures the particulate matter that has flowed into the through-hole. The amount of particulate matter contained in the entire exhaust gas can be roughly estimated from the measured value. This makes it possible to measure a small amount of particulate matter that has not able to be detected by a conventional inspection method.

Since the particulate matter detection device according to the present invention does not measure the total amount of particulate matter contained in exhaust gas, the size of the particulate matter detection device can be reduced. Therefore, the particulate matter detection device can be installed in a narrow space. Moreover, the particulate matter detection device can be produced inexpensively due to a reduction in size thereof.

Since the particulate matter detection device according to the present invention allows only part of exhaust gas (i.e., a particulate matter contained in exhaust gas) to be introduced into the through-hole, the particulate matter introduced into the through-hole can be effectively charged even if the total flow rate of exhaust gas that flows on the downstream side of the DPF is high, so that a measured value with only a small error can be obtained.

Since the detection device body is formed to extend in one direction and has the through-hole that is formed at one end of the detection device body, and at least one pair of electrodes is disposed (buried) at one end of the detection device body, only the through-hole and part of the pair of electrodes can be inserted into a pipe through which high-temperature exhaust gas flows while allowing the other end of the detection device body to be positioned outside the pipe. Therefore, an area such as takeout lead terminals of the pair of electrodes for which exposure to high temperature is not desirable can be positioned outside the pipe, so that an accurate and stable measurement can be implemented.

Since the particulate matter detection device according to the present invention includes the heating section inside the detection device body, a particulate matter adsorbed on the wall surface of the through-hole can be heated and oxidized by the heating section. Moreover, the temperature of the inner space of the through-hole can be adjusted to a desired temperature when measuring the mass of particulate matter, for example, so that a change in electrical properties of the wall that defines the through-hole can be stably measured.

Since the heating section is covered with the protective layer that is formed of alumina having a purity of 95% or more, migration of impurities from the dielectric such as alumina to a material that forms the heating section can be effectively prevented, so that a deterioration in the heating section can be suppressed to improve the durability of the heating section.

### BRIEF DESCRIPTION OF THE DRAWINGS

FIG. 1A is a front view schematically showing a particulate matter detection device according to one embodiment of the present invention.
FIG. 1B is side view schematically showing a particulate matter detection device according to one embodiment of the present invention.
FIG. 2 is a schematic view showing a cross section cut along A-A' line shown in FIG. 1B.
FIG. 3 is a schematic view showing a cross section cut along B-B' line shown in FIG. 2.
FIG. 4 is a schematic view showing a cross section cut along C-C' line shown in FIG. 2.
FIG. 5 is a schematic view showing a cross section cut along D-D' line shown in FIG. 2.
FIG. 6 is a schematic view showing a cross section cut along E-E' line shown in FIG. 2.
FIG. 7 is a schematic view showing a cross section cut along F-F' line shown in FIG. 2.
FIG. 8 is a schematic view showing a cross section cut along G-G' line shown in FIG. 2.
FIG. 9 is a schematic view showing a cross section cut along H-H' line shown in FIG. 2.
FIG. 10 is a schematic view showing a cross section cut along I-I' line shown in FIG. 2.
FIG. 11 is a schematic view showing a cross section cut along J-J' line shown in FIG. 2.
FIG. 12 is a schematic view showing a particulate matter detection device according to another embodiment of the present invention, and corresponds to the cross section of the particulate matter detection device according to one embodiment of the present invention shown in FIG. 3.
FIG. 13 is a schematic view showing a particulate matter detection device according to still another embodiment of the present invention, and corresponds to the cross section of the particulate matter detection device according to one embodiment of the present invention shown in FIG 3.
FIG. 14 is a schematic view showing a particulate matter detection device according to still another embodiment of the present invention, and corresponds to the cross section of the particulate matter detection device according to one embodiment of the present invention shown in FIG 7.
FIG. 15A is a schematic view showing the cross section of a particulate matter detection device according to still another embodiment of the present invention that is perpendicular to the center axis and includes a through-hole.
FIG 15B is a schematic view showing the cross section of a particulate matter detection device according to another embodiment of the present invention that is perpendicular to the center axis and does not include a through-hole.
FIG 16 is a graph showing the measurement results obtained by a heating section durability test.

### DESCRIPTION OF EXEMPLARY EMBODIMENTS

Embodiments of the present invention are described in detail below. Note that the present invention is not limited to the following embodiments. Various modifications and improvements of the design may be appropriately made without departing from the scope of the present invention based on the knowledge of a person having ordinary skill in the art.

### [1] Particulate matter detection device

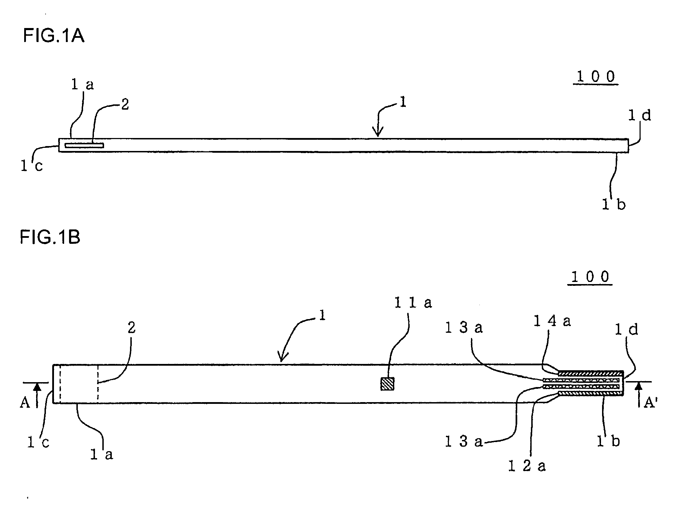

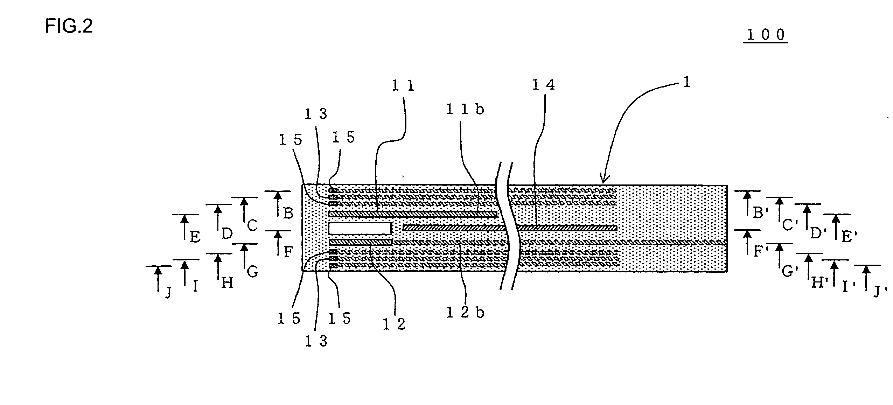

FIG. 1A is a front view schematically showing a particulate matter detection device according to one embodiment of the present invention, FIG 1B is a side view schematically showing a particulate matter detection device according to one embodiment of the present invention, and FIG. 2 is a schematic view showing a cross section cut along A-A' line shown in FIG 1B. Note that a takeout lead terminal (e.g., takeout lead terminal 12a) is omitted in FIG 1A.

As shown in FIGS. 1A, 1B, and 2, a particulate matter detection device 100 according to this embodiment includes a detection device body 1 that extends in one direction and has a through-hole 2 (cavity) that is formed at one end 1a, a pair of electrodes 11 and 12 that are disposed (buried) in the wall of the detection device body 1 that defines the through-hole 2, and are covered with a dielectric, and a heating section 13 that is disposed in the detection device body 1 along the wall surface of the through-hole 2, and adjusts the temperature of the wall that defines the through-hole 2. In the particulate matter detection device 100 according to this embodiment, the heating section 13 is covered with a protective layer 15 that is formed of alumina having a purity of 95% or more.

It is required that the detection device body 1 has at least one through-hole 2, and may have two or more through-holes 2. It is also required that the particulate matter detection device 100 has at least one pair of electrodes 11 and 12, and may have two or more pairs of electrodes 11 and 12.

In the particulate matter detection device 100 according to this embodiment, the pair of electrodes 11 and 12 are buried in the detection device body 1. The detection device body 1 is formed of a dielectric so that the pair of electrodes 11 and 12 are covered with the dielectric. The particulate matter detection device 100 according to this embodiment is configured so that the charged particulate matter contained in a fluid that flows into the through-hole 2, or the particulate matter that is contained in a fluid that flows into the through-hole 2 and is charged by a discharge that occurs in the through-hole 2 due to application of a voltage between the pair of electrodes 11 and 12, can be electrically adsorbed on the wall surface of the through-hole 2. The mass of the particulate matter adsorbed on the wall surface of the through-hole 2 can be detected by measuring a change in electrical properties of the wall that defines the through-hole 2. Therefore, the particulate matter detection device 100 according to this embodiment can detect the particulate matter contained in exhaust gas or the like by allowing the particulate matter pass through the through-hole 2. This makes it possible to measure a small amount of particulate matter that has not been able to be detected by a conventional inspection method.

The particulate matter detection device 100 according to this embodiment can thus measure the mass of particulate matter contained in exhaust gas that flows on the downstream side of a DPF and has flowed into the through-hole 2. Specifically, the particulate matter detection device 100 according to the present invention does not measure the total amount of particulate matter contained in exhaust gas that flows on the downstream side of the DPF, but measures the particulate matter that has flowed into the through-hole 2. The amount of particulate matter contained in the entire exhaust gas can be roughly estimated from the measured value.

Since the particulate matter detection device 100 according to this embodiment does not measure the total amount of particulate matter contained in exhaust gas, the size of the particulate matter detection device can be reduced. Therefore, the particulate matter detection device 100 can be installed in a narrow space such as an automotive exhaust system. Moreover, the particulate matter detection device 100 can be produced inexpensively due to a reduction in size.

Since the particulate matter detection device 100 according to this embodiment allows only part of exhaust gas (i.e., the particulate matter contained in exhaust gas) to be introduced into the through-hole 2, the particulate matter introduced into the through-hole 2 can be effectively charged even if the total flow rate of exhaust gas that flows on the downstream side of the DPF is large, so that a measured value with only a small error can be obtained.

Since the detection device body 1 is formed to extend in one direction and has the through-hole 2 (cavity) that is formed at one end 1a, and at least the pair of electrodes 11 and 12 are disposed (buried) at one end 1a of the detection device body 1, only the area of the detection device body 1 in which the through-hole 2 and the pair of electrodes 11 and 12 are formed can be inserted into a pipe through which high-temperature exhaust gas flows while allowing the other end 1b to be positioned outside the pipe. Therefore, an area such as takeout lead terminals of the pair of electrodes 11 and 12 for which exposure to high temperature is not desirable can be positioned outside the pipe, so that an accurate and stable measurement can be implemented.

Since the particulate matter detection device 100 according to this embodiment includes the heating section 13 that is disposed (buried) in the detection device body 1 along the wall surface (i.e., the wall surface that is parallel to the side surface of the detection device body 1) of the through-hole 2, the particulate matter adsorbed on the wall surface of the through-hole 2 can be heated and oxidized. Moreover, the temperature of the inner space of the through-hole 2 can be adjusted to a desired temperature when measuring the mass of particulate matter, for example, so that a change in electrical properties of the wall that defines the through-hole 2 can be stably measured.

Since the heating section 13 of the particulate matter detection device 100 according to this embodiment is covered with the protective layer 15 that is formed of alumina having a purity of 95% or more, migration of impurities from the dielectric such as alumina that forms the detection device body 1 to a material that forms the heating section 13 can be effectively prevented, so that a deterioration in the heating section 13 can be suppressed. As a result, the durability of the heating section 13 can be improved.

As the dielectric that forms the detection device body 1, a ceramic such as alumina having a relatively low purity of less than 95% may be used to improve adhesion to the pair of electrodes 11 and 12 that are buried in the detection device body 1, for example. The heating section 13 may be formed of a metal such as tungsten having a high melting point and a high electrical resistance so that the inner space of the through-hole can be appropriately heated to a given temperature. However, when causing a metal such as tungsten to come in contact with a dielectric having a relatively low purity as explained above, migration of impurities contained in the dielectric occurs so that the metal that forms the heating section 13 deteriorates. Thus, in the particulate matter detection device 100 according to this embodiment, migration of impurities is prevented by covering the heating section 13 with the protective layer 15 that is formed of alumina having a purity of 95% or more to suppress a deterioration in the heating section 13. As a result, the durability of the heating section 13 is improved.

In the particulate matter detection device 100 according to this embodiment, the dielectric that forms the detection device body 1 is preferably at least one compound selected from the group consisting of alumina, cordierite, mullite, glass, zirconia, magnesia, and titania. Among these, alumina is preferably used. The electrodes 11 and 12 covered with a dielectric can be formed by burying the electrodes 11 and 12 in the detection device body 1 that is formed of such a dielectric. This ensures that the particulate matter detection device 100 exhibits excellent heat resistance, dielectric breakdown resistance, and the like. The term "dielectric" used herein refers to a substance in which dielectricity is predominant over conductivity and behaves as an insulator for a direct-current voltage.

The dielectric is particularly preferably alumina having a purity of 90% or more and less than the purity of alumina that forms the protective layer. Such alumina has high sinterability and can be more densified as compared with high-purity alumina used for the protective layer. As a result, the resulting laminate exhibits improved adhesion.

The heating section is preferably formed of at least one metal selected from the group consisting of tungsten, molybdenum, copper, aluminum, silver, gold, iron, and platinum. This configuration makes it possible to appropriately adjust the temperature of the detection device body, particularly of the wall that defines the through-hole.

The protective layer that covers the heating section 13 is formed of alumina having a purity of 95% or more. The protective layer is preferably formed of alumina having a purity of 97 to 100%. This configuration effectively prevents migration of impurities.

The particulate matter detection device 100 shown in FIGS. 1A, 1B, and 2 includes lines 11b and 12b that respectively extend from the pair of electrodes 11 and 12 toward the other end 1b of the detection device body 1.

In the particulate matter detection device according to this embodiment, it is preferable that a takeout lead terminal of at least one of the pair of electrodes be disposed at the other end of the detection device body. The takeout lead terminal is electrically connected to the electrode disposed in the detection device body of the particulate matter detection device, and is connected to a line from a power supply or the like used to externally apply a voltage to the electrode.

The particulate matter detection device 100 according to this embodiment shown in FIG. 1B includes a plurality of takeout lead terminals (takeout lead terminals 11a, 12a, 13a, and 14a) that are respectively connected to the pair of electrodes 11 and 12, the heating section 13, a ground electrode 14, and the like. The takeout lead terminal 12a of the electrode 12 is disposed at the other end 1b of the detection device body 1.

Since the distance between the area (i.e., one end 1a) in which the through-hole 2 and the pair of electrodes are formed and the takeout lead terminal 12a can be increased by disposing the takeout lead terminal (e.g., takeout lead terminal 12a) of at least one of the pair of electrodes 11 and 12 at the other end 1b of the detection device body 1, only the end 1a at which the through-hole 2 and the like are formed can be inserted into a pipe through which high-temperature exhaust gas flows while allowing the other end 1b on which the takeout lead terminal 12a is disposed to be positioned outside the pipe. If the takeout lead terminal 12a is exposed to a high temperature, the particulate matter detection accuracy may decrease, it may be difficult to stably detect a particulate matter, or a contact failure between an electrical terminal and a harness used for external connection may occur during long-term use. Therefore, the particulate matter can be detected accurately and stably by allowing the takeout lead terminal 12a to be positioned outside the pipe so that the takeout lead terminal 12a is not exposed to a high temperature.

As shown in FIG 1B, the takeout lead terminal 12a disposed at the other end 1b of the detection device body 1 is preferably disposed on the side surface of the other end 1b of the detection device body 1 to extend in the longitudinal direction. It is preferable that the takeout lead terminal 12a be disposed at one end of the side surface of the other end 1b of the detection device body 1 in the widthwise direction. In FIG 1B, the other end 1b of the detection device body 1 has a reduced width. Note that the other end 1b of the detection device body 1 may or may not have a reduced width in this manner. The shape and the size of the takeout lead terminal 12a are not particularly limited. For example, the takeout lead terminal 12a is preferably in the shape of a strip having a width of 0.1 to 2.0 mm and a length of 0.5 to 20 mm. Examples of the material for the takeout lead terminal 12a include Ni, Pt, Cr, W, Mo, Al, Au, Ag, Cu, and the like.

The takeout lead terminals of the pair of electrodes 11 and 12 may be disposed at the other end 1b of the detection device body 1. However, it is preferable to dispose the takeout lead terminal (takeout lead terminal 12a) of one (electrode 12) of the pair of electrodes 11 and 12 at the other end 1b of detection device body 1, and dispose the takeout lead terminal (takeout lead terminal 11a) of the other electrode (electrode 11) between one end 1a and the other end 1b of the detection device body 1.

This makes it possible to dispose the takeout lead terminal (takeout lead terminal 12a) of one (electrode 12) of the pair of electrodes 11 and 12 and the takeout lead terminal (takeout lead terminal 11a) of the other electrode (electrode 11) at an interval. This effectively prevents a situation in which a creeping discharge occurs on the surface of the detection device body 1 when applying a voltage between the takeout lead terminal 11a and the takeout lead terminal 12 a in order to apply a voltage between the pair of electrodes 11 and 12.

Note that the term "one end of the detection device body" used herein refers to an area of the detection device body 1 that corresponds to 30% of the total length of the detection device body 1 from one end face 1c of the detection device body 1. Note that the term "the other end of the detection device body" used herein refers to an area of the detection device body 1 that corresponds to 30% of the total length of the detection device body 1 from the other end face 1d of the detection device body 1.
Therefore, the area between one end 1a and the other end 1b of the detection device body 1 refers to the area of the detection device body 1 other than one end 1a and the other end 1b.

In the particulate matter detection device 100 according to this embodiment, the distance between the takeout lead terminal 11a and the takeout lead terminal 12a is preferably 5 to 100 mm, and more preferably 10 to 70 mm. If the distance between the takeout lead terminal 11 a and the takeout lead terminal 12a is less than 5 mm, a short circuit due to a creeping discharge may occur. If the distance between the takeout lead terminal 11a and the takeout lead terminal 12a is more than 100 mm, when installing the detection device body 1 of the particulate matter detection device 100 in a pipe or the like so that the takeout lead terminal 11a is positioned outside the pipe, the detection device body 1 may protrude from the pipe to a large extent. This makes it difficult to install the detection device body 1 in a narrow space.

The distance between the through-hole 2 and the takeout lead terminal 11a disposed between one end 1a and the other end 1b of the detection device body 1 is preferably 10 mm or more, and more preferably 20 mm or more. If the distance between the through-hole 2 and the takeout lead terminal 11 a is less than 10 mm, when installing the particulate matter detection device 100 in a pipe so that the through-hole 2 is inserted into the pipe, the takeout lead terminal 11a may easily be affected by the heat of high-temperature exhaust gas that passes through the pipe.

The shape and the size of the takeout lead terminal 11a are not particularly limited. For example, the takeout lead terminal 11a preferably has a polygonal (e.g., quadrangular) shape having a width of 0.5 to 3 mm and a length of 0.5 to 3 mm. Note that the takeout lead terminal 11a may have a circular shape, an elliptical shape, a racetrack shape, or the like. Examples of the material for the takeout lead terminal 11a include Ni, Pt, Cr, W, Mo, Al, Au, Ag, Cu, stainless steel, kovar, and the like.

In the particulate matter detection device 100 according to this embodiment, it is also preferable that the takeout lead terminal 13a of the heating section 13 be disposed at the other end 1b of the detection device body 1, but not particularly limited thereto. The takeout lead terminal 13a of the heating section 13 is connected to a line from a power supply or the like used to externally apply a voltage to the heating section 13 in the same manner as the takeout lead terminal of the electrode as explained above.

In the particulate matter detection device according to this embodiment, a ground electrode in the shape of a strip may be disposed between the lines that extend from the pair of electrodes toward the other end of the detection device body. The ground electrode refers to an electrode that is grounded. The particulate matter detection device measures a change in electrical properties of the wall that defines the through-hole by detecting given electrical properties between the pair of electrodes to detect the particulate matter adsorbed on the wall surface of the through-hole. When detecting given electrical properties between the pair of electrodes, the particulate matter detection device also detects the given electrical properties between the two lines that are connected to the pair of electrodes and buried in the dielectric.

Therefore, values detected by the pair of electrodes and the two lines are obtained as the measured values. When the effects of the given electrical properties between the two lines are great, the electrical properties of the wall that defines the through-hole change. Even if the change in electrical properties of the wall that defines the through-hole is detected by the pair of electrodes, the electrical properties between the two lines connected to the pair of electrodes are also measured. This may make it difficult to accurately measure a change in electrical properties of the wall that defines the through-hole. However, since the particulate matter detection device that includes the ground electrode can detect the electrical properties between the pair of electrodes while suppressing the effects of the lines that extend from the pair of electrodes using the ground electrode, a measurement error due to the effect of lines can be reduced. This makes it possible to more accurately measure a change in electrical properties of the wall that defines the through-hole.

When the particulate matter detection device does not include the ground electrode, a current flows through the dielectric placed between the two lines from the line connected to one of the pair of electrodes to the line connected to the other of the pair of electrodes so that the electrical properties between the two lines are detected. On the other hand, when the ground electrode is disposed between the two lines, a current flows from one line to the ground electrode, and does not flow from one line to the other line. Therefore, the electrical properties between the two lines are not detected. When applying a voltage between the pair of electrodes, only the electrical properties of the wall that defines the through-hole positioned between the pair of electrodes can be detected.

The mass of particulate matter may be detected by measuring a change in electrical properties of the pair of electrodes 11 and 12 due to adsorption of the charged particulate matter on the wall surface of the through-hole. Specifically, impedance calculated from the capacitance or the like between the pair of electrodes 11 and 12 is measured, and the mass of particulate matter adsorbed on the wall surface of the through-hole is calculated from a change in impedance to detect the particulate matter (mass) contained in the exhaust gas, for example. Therefore, the particulate matter detection device 100 according to this embodiment preferably further includes a measurement section that is connected to the takeout lead terminals 11a and 12a and measures the impedance between the electrodes 11 and 12. Examples of the measurement section include an LCR meter, an impedance analyzer, and the like that can measure impedance in addition to capacitance.

In the particulate matter detection device 100 according to this embodiment, the detection device body 1 is formed to extend in one direction. The longitudinal length of the detection device body 1 is not particularly limited. It is preferable that the detection device body 1 have a length that allows the particulate matter contained in exhaust gas to be efficiently sampled when inserted into an exhaust gas pipe. In the particulate matter detection device 100 according to this embodiment, the through-hole 2 is formed at one end 1a of the detection device body 1 in the longitudinal direction.

The thickness of the detection device body 1 (i.e., the dimension of the detection device body 1 in the direction perpendicular to the longitudinal direction of the detection device body and the gas circulation direction) is not particularly limited, but is preferably about 0.5 to 3 mm, for example. Note that the thickness of the detection device body 1 refers to the maximum thickness of the detection device body 1 in the thickness direction. The dimension of the detection device body 1 in the circulation direction in which gas passes through the through-hole 2 (i.e., the dimension of the detection device body 1 in the gas circulation direction) is not particularly limited, but is preferably about 2 to 20 mm, for example. The longitudinal length of the detection device body 1 is preferably larger than the thickness of the detection device body 1 by a factor of 10 to 100, and larger than the dimension of the detection device body 1 in the gas circulation direction by a factor of 3 to 100.

As shown in FIGS. 1A and 1B, the detection device body 1 may be in the shape of a plate having a rectangular cross-sectional shape perpendicular to the longitudinal direction, or may be in the shape of a rod having a circular or elliptical cross-sectional shape perpendicular to the longitudinal direction, or may have another shape insofar as the detection device body 1 extends in one direction.

In the particulate matter detection device 100 according to this embodiment, the pair of electrodes 11 and 12 are buried in the wall that defines the through-hole 2, as shown in FIG. 2. The pair of electrodes 11 and 12 that are covered with the dielectric are disposed on either side of the through-hole 2. Therefore, a discharge occurs in the through-hole 2 by applying a given voltage between the electrodes 11 and 12.

The electrodes are buried in the wall that defines the through-hole, and are preferably disposed on either side of the through-hole 2 (FIG 2) sandwiched. Note that the pair of electrodes may be disposed at arbitrary positions in the wall that defines the through-hole 2 insofar as the electrical properties of the wall can be detected and a discharge occurs in the through-hole 2. A plurality of pairs of electrodes may be disposed, and a discharge and electrical property detection may be separately performed using different pairs of electrodes.

The type of discharge is preferably selected from the group consisting of a silent discharge, a streamer discharge, and a corona discharge. In order to cause such a discharge, the particulate matter detection device 100 according to this embodiment preferably further includes a discharge power supply that is connected to the takeout lead terminals 11a and 12a. The discharge power supply is preferably a high-voltage alternating-current power supply or direct-current power supply, for example. A pulse voltage, an alternating-current voltage such as rectangular wave, or the like is preferably applied when causing a discharge to occur. The applied voltage is preferably 50 to 200 kV/cm, although the applied voltage may vary depending on the gap (distance between the pair of electrodes) and the exhaust gas temperature. The power supplied when applying a voltage is preferably 0.1 to 10 W.

When the particulate matter contained in a fluid (i.e., exhaust gas) that flows into the through-hole 2 is not charged, the particulate matter detection device 100 according to this embodiment causes a discharge to occur in the through-hole 2 so that the particulate matter is charged and electrically adsorbed on the wall surface of the through-hole 2. When the particulate matter contained in a fluid that flows into the through-hole 2 has already been charged, the particulate matter need not necessarily be charged by causing a discharge to occur in the through-hole 2. Specifically, the charged particulate matter is electrically adsorbed on the wall surface of the through-hole 2 without causing a discharge to occur in the through-hole 2.

When charging a particulate matter by causing a discharge to occur in the through-hole 2 as explained above, the charged particulate matter is electrically drawn to the electrode that has a polarity opposite to that of the charged particulate matter during a discharge, and adsorbed on the wall surface of the through-hole 2. On the other hand, when the particulate matter has already been charged before the particulate matter flows into the through-hole 2, the charged particulate matter is electrically drawn to the electrode that has a polarity opposite to that of the charged particulate matter by applying a given voltage between the electrodes 11 and 12. When the particulate matter has already been charged before the particulate matter flows into the through-hole 2, the voltage applied between the electrodes 11 and 12 is preferably 4 to 40 kV/cm.

The shape and the size of the electrodes 11 and 12 are not particularly limited insofar as a discharge occurs in the through-hole 2. For example, the electrodes 11 and 12 may have a rectangular shape, a circular shape, an elliptical shape, or the like. The electrodes 11 and 12 preferably have a size equal to or larger than 70% of the area of the through-hole 2 when viewed from the side surface.

The thickness of the electrodes 11 and 12 is not particularly limited insofar as a discharge occurs in the through-hole 2. The thickness of the electrodes 11 and 12 is preferably 5 to 30 µm, for example. Examples of the material for the electrodes 11 and 12 include Pt, Mo, W, and the like.

The distance between one (electrode 11) of the pair of electrodes and the through-hole 2 and the distance between the other (electrode 12) of the pair of electrodes and the through-hole 2 is preferably 50 to 500 µm, and more preferably 100 to 300 µm. This ensures that a discharge effectively occurs in the through-hole. The distance between the electrode 11 and the through-hole 2 and the distance between the electrode 12 and the through-hole 2 mean the thickness of the dielectric that covers the electrode 11 and the electrode 12 in the area that faces the through-hole 2.

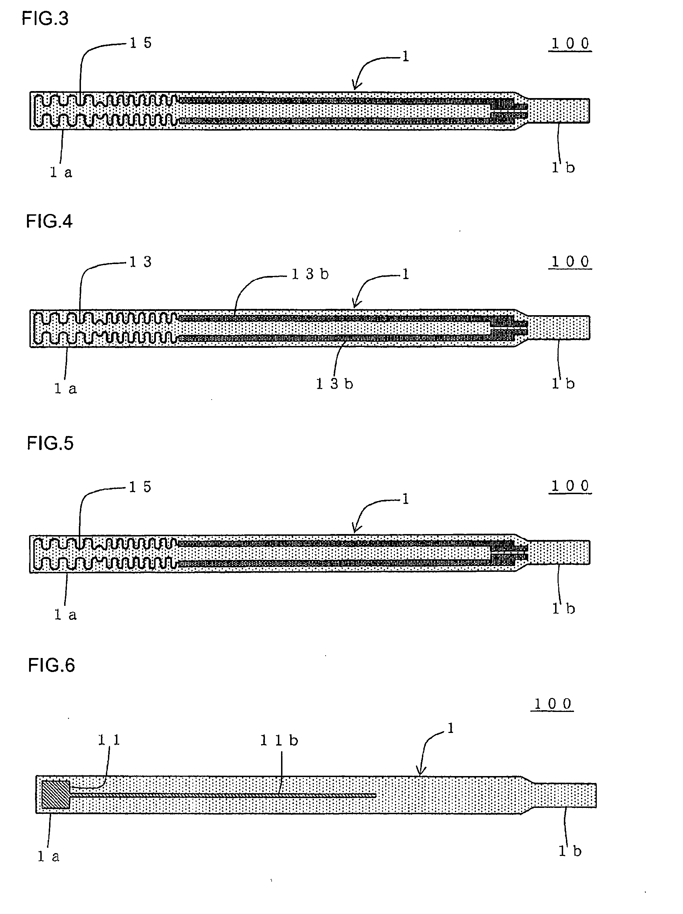

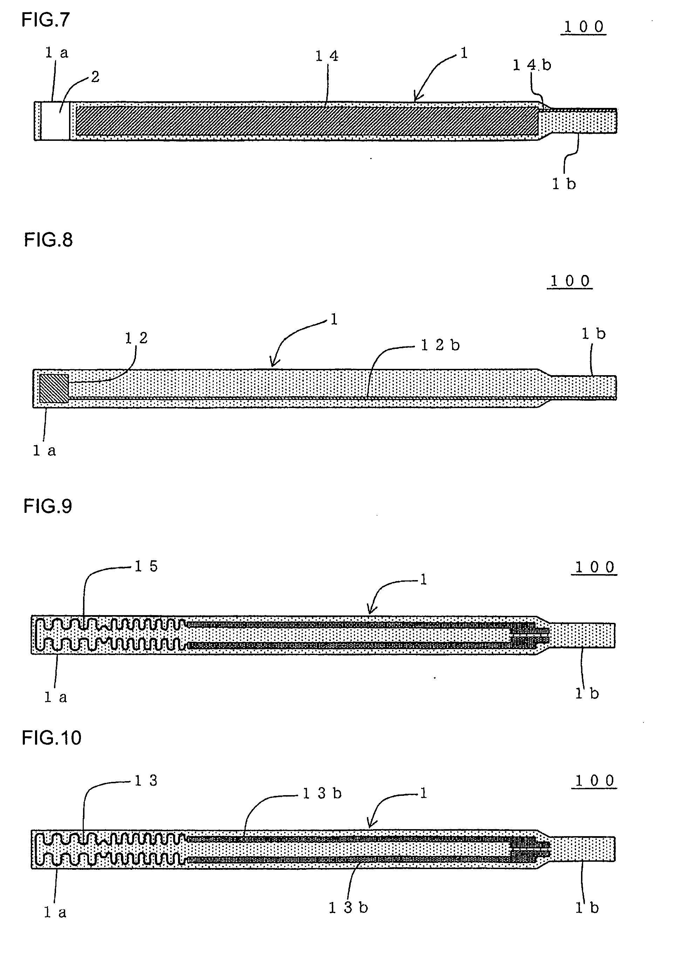

As shown in FIGS. 2, 4, and 10, the particulate matter detection device 100 according to this embodiment includes the heating section 13 that is disposed (buried) in the detection device body 1 along the wall surface (i.e., the wall surface that is parallel to the side surface of the detection device body 1) of the through-hole 2. The particulate matter adsorbed on the wall surface of the through-hole 2 can be heated and oxidized by the heating section 13. Moreover, the temperature of the inner space of the through-hole 2 can be adjusted to a desired temperature when measuring the mass of particulate matter, for example, so that a change in electrical properties of the wall that defines the through-hole 2 can be stably measured. FIG. 4 is a schematic view showing a cross section cut along C-C' line shown in FIG. 2, and FIG. 10 is a schematic view showing a cross section cut along I-I' line shown in FIG 2.

The above heating section may be in the shape of a wide film. As shown in FIGS. 4 and 10, it is preferable that the heating section be formed by disposing a linear metal material in a wave-like manner and turning the metal material in the shape of the letter U at its tip portion. This makes it possible to uniformly heat the inner space of the through-hole.

The heating section 13 is preferably buried in the detection device body 1 along the wall surface of the through-hole 2. As shown in FIGS. 4 and 10, the heating section 13 may be formed to extend toward the other end 1b of the detection device body 1 from the position at which the through-hole 2 is formed. This advantageously reduces the difference in temperature between the inside of the through-hole and the vicinity of the through-hole so that the detection device body rarely breaks even if the detection device body is rapidly heated. It is preferable that the heating section 13 increase the temperature of the inner space of the through-hole 2 up to 650°C.

In the particulate matter detection device 100 according to this embodiment, it is preferable that at least one heating section 13 be disposed on the side of at least one of the pair of electrodes 11 and 12 opposite to the side on which the through-hole is formed. In the particulate matter detection device 100 according to this embodiment shown in FIG 2, the heating section 13 is disposed on the side of each of the pair of electrodes 11 and 12 opposite to the side on which the through-hole is formed.

As discussed above, if the heating section 13 is disposed on the side of at least one of the pair of electrodes 11 and 12 opposite to the side on which the through-hole is formed, a change in electrical properties of the wall that defines the through-hole 2 can be easily measured by the pair of electrodes 11 and 12 without being affected by the heating section 13.

In FIG. 2, two heating sections 13 are respectively provided corresponding to the pair of electrodes 11 and 12. Note that the heating section 13 may be disposed on the side of one of the pair of electrodes opposite to the side on which the through-hole is formed, or a plurality of heating sections may be disposed on the side of the electrode opposite to the side on which the through-hole is formed, for example (not shown in Figures). An arbitrary number of heating sections 13 may be disposed in an arbitrary arrangement in order to appropriately adjust the temperature and oxidize and remove the collected particulate matter.

As shown in FIGS. 4 and 10, the heating section 13 is connected to lines 13b and 13b. The lines 13b and 13b are respectively via-connected to the takeout lead terminals 13a and 13a shown in FIG. 1B. The takeout lead terminal 13a of the heating section 13 is preferably disposed at the other end 1b of the detection device body 1 in the same manner as the takeout lead terminals 11a and 12a of the electrodes 11 and 12 in order to avoid the effects of heat when one end 1a of the detection device body 1 is heated. In FIG. 1B, the takeout lead terminal 12a is disposed at one edge of the side surface of the detection device body 1 in the widthwise direction, and the takeout lead terminals 13a and 13a are disposed in two rows adjacent to the takeout lead terminal 12a. Note that the arrangement of the takeout lead terminal 12a and the takeout lead terminals 13a and 13a is not limited thereto.

When the heating section 13 is linear, the width of the heating section 13 is not limited, but is preferably about 0.05 to 1 mm, for example. The thickness of the heating section 13 is not particularly limited, but is preferably about 5 to 30 µm, for example. The width of the line 13b is not particularly limited, but is preferably about 0.7 to 4 mm, for example. The thickness of the line 13b is not particularly limited, but is preferably about 5 to 30 µm, for example. The width of the takeout lead terminal 13a connected to the heating section 13 is not particularly limited, but is preferably about 0.1 to 2 mm, for example. The thickness of the takeout lead terminal 13a is not particularly limited, but is preferably about 5 to 1000 µm, for example. Examples of the material for the line 13b and the takeout lead terminal 13a include Ni, Pt, Cr, W, Mo, Al, Au, Ag, Cu, stainless steel, kovar, and the like.

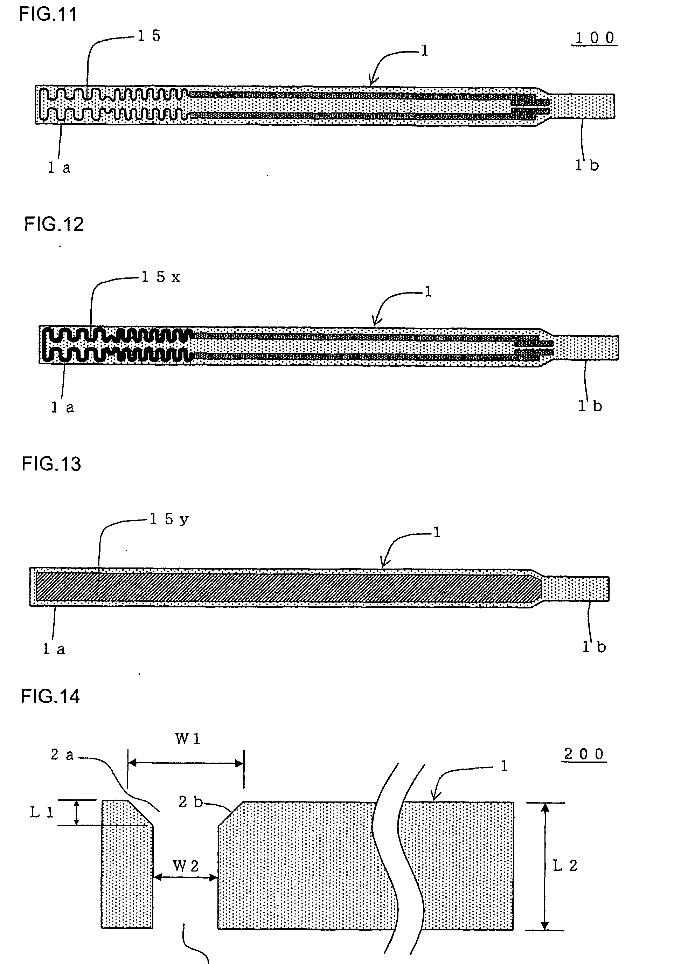

As shown in FIGS. 2, 3, 5, 9, and 11, the heating section is covered with the protective layer 15 that is formed of alumina having a purity of 95% or more. This effectively prevents migration of impurities contained in dielectric such as alumina that forms the detection device body 1 to a material that forms the heating section 13, so that a deterioration in the heating section 13 can be suppressed. As a result, the durability of the heating section 13 can be improved. FIG. 3 is a schematic view showing a cross section cut along B-B' line shown in FIG. 2, FIG. 5 is a schematic view showing a cross section cut along D-D' line shown in FIG 2, FIG. 9 is a schematic view showing a cross section cut along H-H' line shown in FIG 2, and FIG. 11 is a schematic view showing a cross section cut along J-J' line shown in FIG. 2.

The protective layer 15 that prevents migration of impurities to the heating section 13 is disposed at least at the boundary between the heating section 13 and the dielectric that forms the detection device body 1. That is, for example, when the heating section 13 is in the shape of a wide film, it is preferable that the protective layer 15 be also in the shape of a wide film. When the heating section 13 is formed by disposing a linear metal material in a wave-like manner and turning the metal material in the shape of the letter U at the tip portion as shown in FIGS. 4 and 10, it is preferable that the protective layer 15 can have the same shape as that of the heating section 13 shown in FIGS. 3, 5, 9, and 11.

As shown in FIG. 12, the above protective layer may be a protective layer 15x that has a shape that is similar to that of the heating section 13 (see FIG 4) and is larger than that of the heating section 13, i.e., a shape obtained by enlarging the shape of the heating section to some extent, for example. FIG. 12 is a schematic view showing a particulate matter detection device according to another embodiment of the present invention. The cross section of the particulate matter detection device according to one embodiment of the present invention shown in FIG. 3 corresponds to the cross section of the particulate matter detection device shown in FIC. 12.

The above configuration ensures that migration is prevented over a wider range as compared with a protective layer having the same shape as that of the heating section. In FIG. 12, the protective layer 15x covers one side of the heating section. It is preferable that the protective layer 15x having a shape obtained by enlarging the shape of the heating section to some extent be disposed to cover each side of the heating section. The cross section of the protective layer 15x shown in FIG 12 corresponds to the cross section of the protective layer 15 shown in FIG 3. The protective layer shown in FIGS. 5, 9, and 11 may also have a shape obtained by enlarging the shape of the heating section to some extent in the same manner of FIG 12.

In this case, the protective layer preferably has a shape obtained by enlarging the shape of the heating section by about 20% with respect to the centerline of the pattern of the heating section. This configuration can more effectively prevents migration of impurities.

As shown in FIG. 13, the protective layer may be a protective layer 15y, as long as it covers the heating section, that is disposed to cover the cross section of the detection device body including the heating section over a wider range, for example. In FIG. 13, the protective layer 15y is disposed to cover almost the entire cross section of the detection device body 1 (see FIG. 2). FIG. 13 is a schematic view showing a particulate matter detection device according to still another embodiment of the present invention. The cross section of the particulate matter detection device according to one embodiment of the present invention shown in FIG 3 corresponds to the cross section of the particulate matter detection device shown in FIG. 13.

This configuration prevents migration of impurities over a wider range.
Moreover, since the protective layer can be formed by uniformly applying the material for the protective layer to the inside of the detection device body, the protective layer can be easily formed. Moreover, it is also possible to effectively prevent a situation in which the heating section protrudes from the protective layer. It is preferable that the protective layer 15y that is disposed to cover the cross section of the detection device body over a wider range be disposed to cover each side of the heating section.

The thickness of the protective layer is not particularly limited, but is preferably 1 to 50 µm, and more preferably 5 to 10 µm, for example. If the thickness of the protective layer is within the above range, migration of impurities can be sufficiently prevented. Moreover, a decrease in an adhesion strength due to the introduction of too much protection layer can be prevented.

As shown in FIG. 6, the line 11b that extends in the longitudinal direction of the detection device body 1 is connected to the electrode 11. The line 11b is via-connected to the takeout lead terminal 11a shown in FIG 1B at its end (i.e., the end that is not connected to the electrode 11). As shown in FIG. 7, the through-hole 2 is formed at one end 1a of the detection device body 1. FIG. 6 is a schematic view showing a cross section cut along E-E' line shown in FIG 2, and FIG 7 is a schematic view showing a cross section cut along F-F' line shown in FIG. 2.

As shown in FIG 8, the line 12b that extends in the longitudinal direction of the detection device body 1 is connected to the electrode 12. The line 12b is via-connected to the takeout lead terminal 12a shown in FIG 1B. FIG 8 is a schematic view showing a cross section cut along G-G' line shown in FIG. 2.

The width of the lines 11b and 12b is not particularly limited, but is preferably about 0.2 to 1 mm, for example. The thickness of the lines 11b and 12b is not particularly limited, but is preferably about 5 to 30 µm, for example. Examples of the material for the lines 11b and 12b include Pt, Mo, W, and the like.

The particulate matter detection device 100 according to this embodiment may be configured to oxidize and remove the particulate matter adsorbed on the wall surface of the through-hole 2 by applying a voltage between the pair of electrodes 11 and 12 so that a discharge occurs in the through-hole 2. When oxidizing and removing a particulate matter by causing a discharge to occur in the through-hole 2, the field intensity is preferably 10 to 200 kV/cm, and the amount of energy supplied is 0.05 to 10 J/µg with respect to the treatment target substance.

The particulate matter detection device 100 according to this embodiment preferably further includes a heating power supply that is connected to the takeout lead terminal 13a of the heating section 13. The heating power supply may be a constant current power supply or the like.

As shown in FIGS. 2 to 11, when the particulate matter detection device 100 according to this embodiment includes the ground electrode 14 that is in the shape of a strip and is disposed between the lines 11b and 12b that respectively extend from the pair of electrodes 11 and 12, the ground electrode 14 is preferably disposed so that a current which flows from one (e.g., line 11b) of the lines 11b and 12b to the other line (e.g., line 12b) can be prevented. When vertically moving with respect to the ground electrode 14 and superimposing at least one of the lines 11b and 12b on the ground electrode 14, it is preferable that 95% of the line overlaps the ground electrode 14 in the lengthwise direction. It is preferable that the ground electrodes 14 be disposed in a plane parallel to the longitudinal direction and the widthwise direction of the detection device body 1.

It is preferable that the width of the ground electrode 14 be 70 to 95% of the width of the detection device body 1, and the length of the ground electrode 14 be 50 to 95% of the length of the detection device body 1. It is more preferable that the width of the ground electrode 14 be 80 to 90% of the width of the detection device body 1, and the length of the ground electrode 14 be 70 to 90% of the length of the detection device body 1. This makes it possible to more effectively prevent a situation in which a current flows from one line to the other line.

The width of the ground electrode 14 refers to the dimension of the ground electrode 14 in the extension direction of the through-hole 2 (fluid circulation direction), and the width of the detection device body 1 refers to the dimension of the detection device body 1 in the extension direction of the through-hole 2 (fluid circulation direction). As shown in FIG. 7, the through-hole 2 is formed at one end 1a of the detection device body 1, and the ground electrode 14 that extends in the shape of a strip from the through-hole 2 toward the other end 1b is buried in the detection device body 1.

The shape of the ground electrode 14 is not particularly limited. The ground electrode 14 may have a rectangular shape, an elliptical shape, or the like. The thickness of the ground electrode 14 is not particularly limited insofar as a current which flows from one line to the other line can be prevented. The thickness of the ground electrode 14 is preferably 10 to 200 µm, for example. Examples of the material for the ground electrode 14 include Ni, Pt, Cr, W, Mo, Al, Au, Ag, Cu, stainless steel, kovar, and the like.

The distance between the ground electrode 14 and the line 11b and the distance between the ground electrode 14 and the line 12b are preferably 100 to 500 µm, and more preferably 150 to 250 µm respectively. This makes it possible to more effectively prevent a situation in which a current flows from one line to the other line.

As shown FIG.7, the particulate matter detection device 100 according to this embodiment, the line 14b that extends in the longitudinal direction of the detection device body 1 is connected to the ground electrode 14. The line 14b is via-connected to the takeout lead terminal 14a shown in FIG. 1B at its tip portion (i.e., the end that is not connected to the ground electrode 14).

The width of the line 14b is not particularly limited, but is preferably about 0.2 to 1 mm, for example. The thickness of the line 14b is not particularly limited, but is preferably about 5 to 30 µm, for example. Examples of the material for the line 14b include Pt, Mo, W, and the like.

In the particulate matter detection device 100 according to this embodiment, the shape and the size of the through-hole 2 are not particularly limited insofar as exhaust gas passes through the through-hole 2 and the amount of particulate matter can be measured. For example, the dimension of the through-hole 2 in the longitudinal direction of the detection device body is preferably about 2 to 20 mm. The width of the area of the through-hole 2 sandwiched between the electrodes 11 and 12 (i.e., the dimension of the through-hole 2 in the direction perpendicular to the longitudinal direction of the detection device body and the gas circulation direction) is preferably about 3 to 30 mm.

If the through-hole 2 has dimensions within the above range, exhaust gas containing a particulate matter can sufficiently pass through the through-hole 2. Moreover, it is possible to cause a discharge effective for charging the particulate matter to occur in the through-hole 2.

It is preferable that at least one of the fluid inlet and the fluid outlet of the through-hole 2 be expanded. If at least one of the fluid inlet and the fluid outlet of the through-hole 2 is expanded, it is possible to more efficiently cause exhaust gas or the like that flows through a pipe to flow into the through-hole of the particulate matter detection device (when the fluid inlet is expanded), or flow out from the through-hole of the particulate matter detection device (when the fluid outlet is expanded).

In a particulate matter detection device (particulate matter detection device 200) according to another embodiment of the present invention shown in FIG. 14, only a fluid inlet 2a of the through-hole 2 is expanded to form an expanded area 2b. In the particulate matter detection device 200 shown in FIG 14, the through-hole 2 is expanded in the longitudinal direction of the detection device body 1. Note that the through-hole 2 may be expanded in the thickness direction of the detection device body 1. FIG 14 is a schematic view showing a particulate matter detection device according to another embodiment of the present invention. The cross section of the particulate matter detection device (particulate matter detection device 100) according to one embodiment of the present invention shown in FIG. 7 corresponds to the cross section of the particulate matter detection device shown in FIG 14.

The width W1 (i.e., the width of the tip portion of the through-hole 2 in the gas circulation direction) of the expanded area 2b is preferably 2 to 200% of the width W2 of the unexpanded area of the through-hole 2. The depth L1 (i.e., the depth of the expanded area) of the expanded area 2b of the through-hole 2 in the gas circulation direction is preferably 5 to 30% of the dimension L2 of the through-hole 2 in the gas circulation direction.

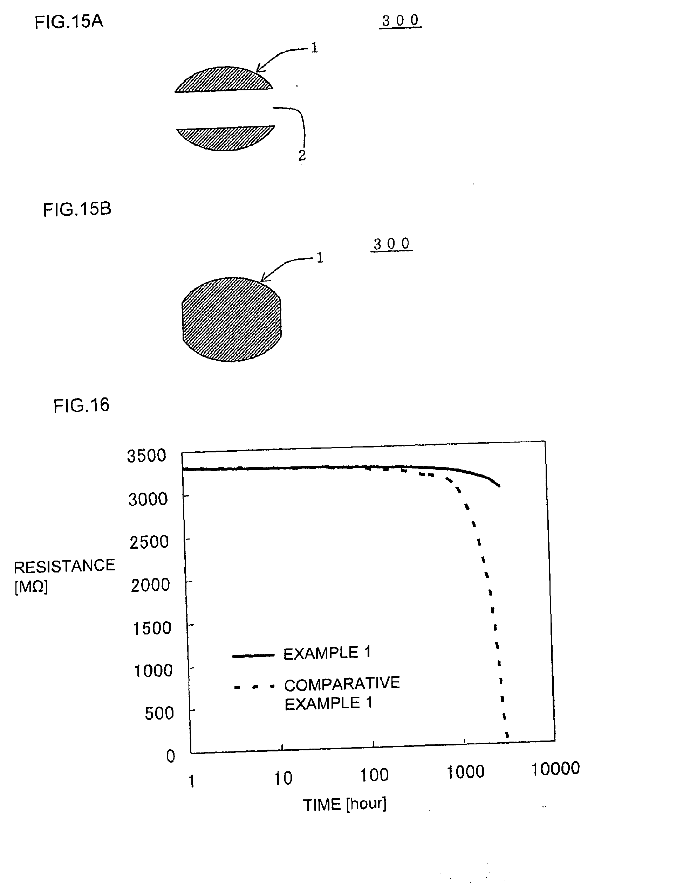

In a particulate matter detection device (particulate matter detection device 300) according to another embodiment of the present invention shown in FIGS. 15A and 15B, the cross-sectional shape of the detection device body 1 in the direction perpendicular to the center axis preferably gradually increases in thickness from the one end toward the center, has the maximum thickness at the center, and gradually decreases in thickness toward the other end in the extension direction of the through-hole 2. If the detection device body has such a shape, exhaust gas sufficiently flows through a pipe when the gas circulation direction of the through-hole coincides with (is parallel to) the circulation direction of exhaust gas in the pipe.

The "center" of the particulate matter detection device (detection device body) in the extension direction of the through-hole refers to the center area when equally dividing the particulate matter detection device in the extension direction of the through-hole into three sections, indicating the "range of one-third" positioned in the center of the particulate matter detection device. Therefore, the expression "has the maximum thickness at the center of the particulate matter detection device in the extension direction of the through-hole" means that an area having the maximum thickness is included in the center area. FIG 15A is a schematic view showing the cross section of a particulate matter detection device according to another embodiment of the present invention that is perpendicular to the center axis and includes the through-hole, and FIG 15B is a schematic view showing the cross section of a particulate matter detection device according to another embodiment of the present invention that is perpendicular to the center axis and does not include the through-hole.

In the particulate matter detection device according to this embodiment, it is preferable that the detection device body 1 be formed by stacking a plurality of tape-shaped ceramic (ceramic sheets). In this case, since the particulate matter detection device can be formed by stacking a plurality of tape-shaped ceramic while interposing the electrode, the line, and the like between the tape-shaped ceramic, the particulate matter detection device according to this embodiment can be efficiently produced.

The particulate matter detection device according to this embodiment is particularly effective when a particulate matter that passes through the through-hole is soot discharged from a diesel engine.

### [2] Method of producing particulate matter detection device

A method of producing the particulate matter detection device according to this embodiment is described below taking an example of producing the particulate matter detection device 100 shown in FIGS. 1A to 11.

### [2-1] Preparation of forming raw material

At least one ceramic raw material (dielectric raw material) selected from the group consisting of alumina, a cordierite-forming raw material, mullite, glass, zirconia, magnesia, and titania and other components used as a forming raw material are mixed to prepare a slurried forming raw material. The above raw material is preferable as the ceramic raw material (dielectric raw material). Note that the ceramic raw material is not limited thereto. As the components other than the ceramic raw material, it is preferable to use a binder, a plasticizer, a dispersant, a dispersion medium, and the like.

The binder is not particularly limited. An aqueous binder or a non-aqueous binder may be used. As the aqueous binder, methyl cellulose, polyvinyl alcohol, polyethylene oxide, or the like may be suitably used. As the non-aqueous binder, polyvinyl butyral, an acrylic resin, polyethylene, polypropylene, or the like may be suitably used. Preferable examples of the acrylic resin include a (meth)acrylic resin, a (meth)acrylate ester copolymer, an acrylate-methacrylate copolymer, and the like.

The binder is preferably added in an amount of 3 to 20 parts by mass, and more preferably 6 to 17 parts by mass, with respect to 100 parts by mass of the dielectric raw material. If the amount of the binder is within the above range, cracks or the like do not occur when forming the slurried forming raw material into a green sheet, or when drying and firing the green sheet.

As the plasticizer, glycerol, polyethylene glycol, dibutyl phthalate, di(2-ethylhexyl) phthalate, diisononyl phthalate, or the like may be used.

The plasticizer is preferably added in an amount of 30 to 70 parts by mass, and more preferably 45 to 55 parts by mass, with respect to 100 parts by mass of the binder added. If the amount of the plasticizer is more than 70 parts by mass, the resulting green sheet becomes too soft and may be deformed when processing the green sheet. If the amount of the plasticizer is less than 30 parts by mass, the resulting green sheet becomes too hard so that the handling capability may deteriorate (e.g., cracks may occur when merely bending the green sheet).

As the dispersant, an aqueous dispersant such as anionic surfactant, wax emulsion, or pyridine, or a non-aqueous dispersant such as fatty acid, phosphate, or synthetic surfactant may be used.

The dispersant is preferably added in an amount of 0.5 to 3 parts by mass, and more preferably 1 to 2 parts by mass, with respect to 100 parts by mass of the dielectric raw material. If the amount of the dispersant is less than 0.5 parts by mass, the dispersibility of the dielectric raw material may decrease. As a result, the green sheet may produce cracks or the like. If the amount of the dispersant is more than 3 parts by mass, the amount of impurities may increase during firing although the dispersibility of the dielectric raw material remains the same.

As the dispersion medium, water or the like may be used. The dispersion medium is preferably added in an amount of 50 to 200 parts by mass, and more preferably 75 to 150 parts by mass, with respect to 100 parts by mass of the dielectric raw material.

The above materials are sufficiently mixed using an alumina pot and alumina cobblestone to prepare a slurried forming raw material for forming a green sheet. The slurried forming raw material may be prepared by mixing the materials by ball milling using a mono ball.

The slurried forming raw material for forming a green sheet is stirred under reduced pressure to remove bubbles, and the viscosity of the forming raw material slurry is adjusted to a given value. The viscosity of the slurried forming raw material thus prepared is preferably 2.0 to 6.0 Pa·s, more preferably 3.0 to 5.0 Pa·s, and particularly preferably 3.5 to 4.5 Pa·s. The slurry can be easily formed into a sheet by adjusting the viscosity of the slurry to a value within the above range. It may be difficult to form the slurry into a sheet if the viscosity of the slurry is too high or too low.
The viscosity of the slurry refers to a value measured using a Brookfield viscometer.

### [2-2] Forming process

The slurried forming raw material obtained by the above method is formed into a tape shape to obtain a green sheet that extends in one direction. The forming process method is not particularly limited insofar as a green sheet can be formed by forming the forming raw material into a sheet. The conventional method such as a doctor blade method, a press forming method, a rolling method, a calender roll method, or the like may be used. A green sheet for forming a through-hole is produced so that a through-hole is formed when stacking the green sheets. The thickness of the green sheet is preferably 50 to 800 µm.

### [2-3] Formation of green sheet laminate

Next, each electrode, a line, a heating section, and a takeout lead terminal are formed on the surface of the obtained green sheet. For example, a conductive paste for forming an electrode, a line, a heating section, and a takeout lead terminal is prepared. The resulting conductive paste is printed on the green sheet at corresponding positions as shown in FIGS. 4, 6 to 8, and 10 to form an electrode, a line, a heating section, and a takeout lead terminal.

The conductive paste may be prepared by adding a binder and a solvent such as terpineol to a powder that contains at least one component selected from the group consisting of gold, silver, platinum, nickel, molybdenum, and tungsten depending on the materials necessary for forming the electrode, line, etc., and sufficiently kneading the mixture using a triple roll mill or the like. The conductive paste may be printed by an arbitrary method. For example, screen printing or the like may be used.

A paste for forming a protective layer for the heating section may be prepared by adding a binder and a solvent such as terpineol to an alumina powder having a purity of 95% or more, and sufficiently kneading the mixture using a triple roll mill or the like. The paste for forming a protective layer may be printed by an arbitrary method. For example, screen printing or the like may be used.

More specifically, an electrode is formed at one end of one side of each of two green sheets, and a line that extends from the electrode to the other end is formed to obtain two electrode green sheets. A ground electrode is formed on another green sheet at a position at which the ground electrode overlaps the line when stacked on the electrode green sheet to obtain a ground electrode green sheet. A cut area which defines a through-hole later is formed in another green sheet at a position at which the cut area overlaps the electrode when stacked on the electrode green sheet to obtain a cut area green sheet. A heating section is formed on another green sheet at a position at which the heating section overlaps the cut area which forms a through-hole later when stacked on the cut area green sheet. A line that extends from the heating section to the other end is formed to obtain a heating section green sheet.

When forming the heating section green sheet, the paste for forming a protective layer is applied to the surface of the green sheet in the area in which at least the heating section is formed to form a protective layer (i.e., one side of the protective layer), and the conductive paste for forming a heating section is applied to the surface of the protective layer to form a heating section. The paste for forming a protective layer is then applied to cover the heating section to form a protective layer (i.e., the other side of the protective layer) to form a heating section green sheet.

The green sheets thus obtained are stacked according to the configuration of the particulate matter detection device to obtain a green sheet laminate.

### [2-4] Firing

The green sheet laminate thus obtained is dried and fired to obtain a particulate matter detection device. Specifically, the green sheet laminate is dried at 60 to 150°C, and fired at 1200 to 1600°C to obtain the particulate matter detection device. When the green sheet contains an organic binder, the green sheet is preferably debinded at 400 to 800°C before firing.

According to the above production method, the particulate matter detection device of invention can be efficiently produced. Note that the method of producing the particulate matter detection device according to this embodiment is not limited to the above method.

### EXAMPLES

The present invention is further described below by way of examples. Note that the present invention is not limited to the following examples.

### Example 1

### (Preparation of forming raw material)

An alumina pot was charged with alumina as dielectric raw material, polyvinyl butyral as binder, di(2-ethylhexyl) phthalate as plasticizer, sorbitan trioleate as dispersant, and an organic solvent (xylene:butanol=6:4 (mass ratio)) as dispersion medium. The components were mixed to prepare a slurried forming raw material for forming a green sheet. 7 parts by mass of the binder, 3.5 parts by mass of the plasticizer, 1.5 parts by mass of the dispersant, and 100 parts by mass of the organic solvent were used with respect to 100 parts by mass of alumina.

The slurried forming raw material thus obtained was stirred under reduced pressure to remove bubbles, and the viscosity of the slurried forming raw material was adjusted to 4 Pa·s. The viscosity of the slurry was measured using a Brookfield viscometer.

### (Forming process)

The slurried forming raw material obtained by the above method was formed into a sheet using a doctor blade method. A cut area green sheet was also produced so that a through-hole was formed when stacking the green sheets. The thickness of the green sheet was 250 µm.

An electrode, a ground electrode, a heating section, a line, and a takeout lead terminal just as disclosed in FIGS. 1B and 3 to 11 were formed on the surface of the green sheet thus obtained. A protective layer was formed of alumina having a purity of 95% or more to cover the heating section. A conductive paste for forming the electrode, ground electrode, line, and takeout lead terminal was prepared by adding 2-ethylhexanol as solvent, polyvinyl butyral as binder, di(2-ethylhexyl) phthalate as plasticizer, sorbitan trioleate as dispersant, alumina as green sheet common material, and a glass frit as sintering aid to a platinum powder, and sufficiently kneading the mixture using a kneader and a triple roll mill (platinum:alumina:glass frit:2-ethylhexanol:polyvinyl butyral:di(2-ethylhexyl) phthalate:sorbitan trioleate=80:15:5:50:7:3.5:1 (mass ratio)).

A conductive paste for forming the heating section was prepared by adding 2-ethylhexanol as solvent, polyvinyl butyral as binder, di(2-ethylhexyl) phthalate as plasticizer, sorbitan trioleate as dispersant, alumina as green sheet common material, and a glass frit as sintering aid to a tungsten powder, and sufficiently kneading the mixture using a kneader and a triple roll mill (tungsten:alumina:glass frit:2-ethylhexanol:polyvinyl butyral:di(2-ethylhexyl) phthalate:sorbitan trioteate=75.5:15:5:50:7:3.5:1 (mass ratio)).

A conductive paste for forming the protective layer was prepared by adding 2-ethylhexanol as solvent, polyvinyl butyral as binder, di(2-ethylhexyl) phthalate as plasticizer, sorbitan trioleate as dispersant, and a glass frit as sintering aid to an alumina powder (purity: 99%), and sufficiently kneading the mixture using a kneader and a triple roll mill (alumina:glass frit:2-ethylhexanol:polyvinyl butyral:di(2-ethylhexyl) phthalate:sorbitan trioleate=60:0.3:50:5:3.5:1 (mass ratio)).

The electrode, the ground electrode, the line, the takeout lead terminal, the heating section, and the protective layer having a given shape were formed by screen printing using the pastes obtained by the above methods.

More specifically, an electrode was formed at one end of one side of each of two green sheets, and a line that extends from the electrode to the other end was formed to obtain two electrode green sheets. A ground electrode was formed on another green sheet at a position at which the ground electrode overlaps the line when stacked on the electrode green sheet to obtain a ground electrode green sheet. A cut area which defines a through-hole later was formed in another green sheet at a position at which the cut area overlaps the electrode when stacked on the electrode green sheet to obtain a cut area green sheet. A heating section was formed on another green sheet at a position at which the heating section overlaps the cut area which forms a through-hole later when stacked on the cut area green sheet. A line extending from the heating section to the other end was formed to obtain a heating section green sheet.

When forming the heating section green sheet, the paste for forming a protective layer was applied to the surface of the green sheet used in the area in which at least the heating section was formed to form a protective layer (i.e., one side of the protective layer), and the conductive paste for forming a heating section was applied to the surface of the protective layer to form a heating section. Moreover, the paste for forming a protective layer was then applied to cover the heating section to form a protective layer (i.e., the other side of the protective layer) to form a heating section green sheet.

A green sheet on which an electrode and the like were not formed was stacked on each of the electrode green sheets to cover the electrode and the line with the green sheet to obtain electrode-buried green sheets. The ground electrode green sheet and the cut area green sheet were interposed between the electrode-buried green sheets. Furthermore, the heating section green sheet was then stacked on the electrode-buried green sheet to obtain a green sheet laminate in which the cut area was interposed between the two electrodes and the ground electrode was interposed between the two lines. The line and the takeout lead terminal were via-connected using a conductive paste.

The green sheets were stacked under pressure using a heating-type uniaxial press machine to obtain an unfired body composed of green sheet laminate of a particulate matter detection device.

### (Firing)

The green sheet laminate (unfired body of particulate matter detection device) thus obtained was dried at 120°C, and fired at 1500°C to obtain a particulate matter detection device. The resulting particulate matter detection device was in the shape of a rectangular parallelepiped of 0.7 cm ×0.2 cm ×12 cm. The other end of the particulate matter detection device had a reduced thickness as shown in FIG. 1B. The other end of the particulate matter detection device had a width of 4.25 cm and a length of 1.2 cm. The cross-sectional shape of the through-hole in the direction perpendicular to the exhaust gas circulation direction was rectangular of 10 cm ×0.5 cm.

### (Discharge power supply)

As a discharge power supply, a pulse power supply and a DC power supply were connected to the takeout lead terminals of the electrodes.

### (Measurement section)

An impedance analyzer (manufactured by Agilent Technologies) was used as a measurement section that measures the impedance between the electrodes. The measurement section was connected to the takeout lead terminals of the electrodes. The takeout lead terminal of the ground electrode was grounded.

### (Particulate matter measurement method)

The particulate matter detection device thus obtained was installed in an exhaust pipe connected to a diesel engine. A direct-injection diesel engine of displacement: 2000 cc was used as the diesel engine. Exhaust gas was generated at an engine speed of 1500 rpm, a torque of 24 N·m, an exhaust gas recirculation (EGR) rate of 50%, an exhaust gas temperature of 200°C, and an air intake of 1.3 m³/min (room temperature).

The amount of particulate matter contained in the exhaust gas measured by a smoke meter ("4158" manufactured by AVL) was 2.0 mg/m³. The particulate matter was detected as follows. Before charging and collecting a particulate matter, the initial capacitance (pF) between the pair of electrodes was measured for one minute six times in a state in which exhaust gas was discharged from the diesel engine. After charging and collecting the particulate matter for one minute under the above conditions, the charging/collection operation was stopped. The capacitance (pF) (capacitance between the pair of electrodes after collecting the particulate matter for one minute) was measured for one minute six times. The average value of the six measured values was calculated for each of the initial capacitance and the capacitance after collecting the particulate matter for one minute. The mass of the collected particulate matter was calculated from the difference between the initial capacitance and the capacitance after collecting the particulate matter for one minute.

A calibration curve was provided in advance for a change in capacitance with respect to the adsorption amount of particulate matter, and the mass of the collected particulate matter was calculated using the calibration curve. Note that the particulate matter was not burnt using the heating section (heater) during the measurement. When charging and collecting the particulate matter, a DC voltage of 2.0 kV was applied using a high-voltage power supply. The capacitance between the electrodes was measured at an applied voltage (AC) of 2 V and a frequency of 10 kHz. The results are shown in Table 1.

### (Comparative Example 1)

A particulate detection device (Comparative Example 1) was produced in the same manner as in Example 1, except that the protective layer that covers the heating section was not formed.

### (Heating section durability test)

A rated voltage (25 V) was applied to the heating section of the particulate matter detection device of Example 1 and Comparative Example 1, and the end (i.e., the area of the detection device body in which the through-hole was formed) of the particulate matter detection device was held at about 800°C for a long time. The resistance between the heating section (e.g., the heating section 13 shown in FIG 2) and the electrode (e.g., the electrode 12 shown in FIG. 2) that was nearest to the heating section was sampled at about 800°C every minute. The measurement was continuously performed for 3000 hours. FIG. 16 is a graph showing the measurement results obtained by the heating section durability test. The horizontal axis indicates the measurement time (hour), and the vertical axis indicates the resistance (MΩ) between the heating section and the electrode.

**TABLE 1**

| | Capacitance |
|---|---|
| Initial | 1.08 pF |
| After collecting particulate matter for one minute | 1.75 pF |

Table 1 clearly shows the difference between the initial capacitance (impedance) and the capacitance after collecting a particulate matter.
This suggests that an increase in the amount of particulate matter in exhaust gas can be detected by performing an impedance measurement for one minute. As shown in FIG 16, the heating section of the particulate matter detection device (Comparative Example 1) that did not include the protective layer showed dielectric breakdown that is considered to occur due to ionic migration in the heating section during long-tem use. The particulate matter detection device (Example 1) including the protective layer showed improved electrical insulation durability as compared with the particulate matter detection device (Comparative Example 1) that did not include the protective layer. Specifically, the heating section of the particulate matter detection device according to the present invention rarely shows dielectric breakdown due to migration and exhibits improved durability.

The particulate matter detection device according to the present invention may be suitably used to immediately detect the occurrence of defects and to recognize the abnormality of a DPF. This makes it possible to contribute to preventing air pollution.

## Claims

1. A particulate matter detection device, comprising:
a detection device body that extends in one direction and has at least one through-hole that is formed at one end of the detection device body;
at least one pair of electrodes that are buried in the wall of the detection device body that defines the through-hole, and are covered with a dielectric; and
a heating section that is disposed in the detection device body along the wall surface of the through-hole, and adjusts the temperature of the wall that defines the through-hole,
wherein the heating section is covered with a protective layer that is formed of alumina having a purity of 95% or more,
the particulate matter detection device being configured so that charged particulate matter contained in a fluid that flows into the through-hole, or the particulate matter that is contained in a fluid that flows into the through-hole and is charged by a discharge that occurs in the through-hole due to application of a voltage between the pair of electrodes, can be electrically adsorbed on the wall surface of the through-hole, and the particulate matter adsorbed on the wall surface of the through-hole can be detected by measuring a change in electrical properties of the wall that defines the through-hole.

2. The particulate matter detection device according to claim 1, wherein the dielectric is at least one compound selected from the group consisting of alumina, cordierite, mullite, glass, zirconia, magnesia, and titania.

3. The particulate matter detection device according to claim 1, wherein the dielectric is alumina having a purity of 90% or more and less than the purity of alumina that forms the protective layer.

4. The particulate matter detection device according to any one of claims 1 to 3,
wherein the heating section is formed of at least one metal selected from the group consisting of tungsten, molybdenum, copper, aluminum, silver, gold, iron, and platinum.

5. The particulate matter detection device according to any one of claims 1 to 4,
wherein a takeout lead terminal of at least one of the pair of electrodes is disposed at the other end of the detection device body.

6. The particulate matter detection device according to any one of claims 1 to 5,
wherein a takeout lead terminal of the heating section is disposed at the other end of the detection device body.

7. The particulate matter detection device according to any one of claims 1 to 6,
wherein at least one of a fluid inlet and a fluid outlet of the through-hole is expanded.

8. The particulate matter detection device according to any one of claims 1 to 7,
wherein the cross-sectional shape of the detection device body in the direction perpendicular to the center axis of the detection device body gradually increases in thickness from one end toward the center, has the maximum thickness at the center, and gradually decreases in thickness toward the other end in an extension direction of the through-hole.

9. The particulate matter detection device according to any one of claims 1 to 8, the particulate matter detection device being configured so that the particulate matter adsorbed on the wall surface of the through-hole can be oxidized and removed by causing a discharge to occur in the through-hole by applying a voltage between the pair of electrodes.

10. The particulate matter detection device according to any one of claims 1 to 9,
wherein the discharge that occurs in the through-hole is selected from the group consisting of a silent discharge, a streamer discharge, and a corona discharge.
